(19) **Europäisches Patentamt European Patent Office Office européen des brevets**

(11) **EP 3 300 544 B1**

(12) **FASCICULE DE BREVET EUROPEEN**

(45) Date de publication et mention de la délivrance du brevet:
**23.03.2022 Bulletin 2022/12**

(21) Numéro de dépôt: **16733122.2**

(22) Date de dépôt: **06.04.2016**

(51) Classification Internationale des Brevets (IPC):
**H02P 21/10** (2016.01)     **H02P 27/02** (2016.01)

(52) Classification Coopérative des Brevets (CPC):
**H02P 21/10; H02P 27/026**

(86) Numéro de dépôt international:
**PCT/FR2016/050781**

(87) Numéro de publication internationale:
**WO 2016/166444 (20.10.2016 Gazette 2016/42)**

(54) **PROCÉDÉ ET SYSTÈME DE COMMANDE D'UNE MACHINE ÉLECTRIQUE ASYNCHRONE D'UN GROUPE MOTOPROPULSEUR D'UN VÉHICULE AUTOMOBILE À TRACTION ÉLECTRIQUE OU HYBRIDE**

VERFAHREN UND SYSTEM ZUR STEUERUNG EINER ELEKTRISCHEN ASYNCHRONMASCHINE EINES ANTRIEBSSTRANGS EINES KRAFTFAHRZEUGS MIT ELEKTRO- ODER HYBRIDANTRIEB

METHOD AND SYSTEM FOR THE CONTROL OF AN INDUCTION MACHINE APPLIED TO THE ELECTRICAL TRACTION OF AN ELECTRIC OR HYBRID AUTOMOBILE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.04.2015 FR 1553171**

(43) Date de publication de la demande:
**04.04.2018 Bulletin 2018/14**

(73) Titulaire: **Renault s.a.s**
**92100 Boulogne Billancourt (FR)**

(72) Inventeur: **MALOUM, Abdelmalek**
**94550 Chevilly-larue (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**CN-A- 101 931 361     US-A1- 2015 032 423**

**Description**

L'invention a pour domaine technique la commande de machines électriques, et en particulier, la commande de machines électriques asynchrones.

La machine électrique asynchrone, de par sa construction, est la machine électrique la plus robuste et la moins chère du marché. Les progrès concernant la commande de telles machines et les avancées technologiques considérables, tant dans le domaine de l'électronique de puissance que dans celui de la micro-électronique, ont rendu possible l'implantation de commandes performantes de cette machine faisant d'elle un concurrent redoutable dans les secteurs de la vitesse variable et du contrôle rapide du couple. Cependant de nombreux problèmes demeurent. L'influence des variations des paramètres de la machine et la présence de capteurs mécaniques sont autant de difficultés qui ont aiguisé la curiosité des chercheurs et ingénieurs.

La machine asynchrone à cage dont le rotor ne tourne pas à la vitesse du champ tournant et dont la seule entrée électrique est au stator pose des problèmes difficiles pour sa commande. Pour contrôler le couple, la vitesse (ou la position de la machine), il a été proposé des techniques différentes. Il a notamment été proposé des méthodes scalaires, mais ces méthodes ont pour inconvénient de ne pas pouvoir garantir le couple à l'arrêt ou d'être suffisamment dynamiques et précises.

Il a également été proposé des méthodes vectorielles, plus dynamiques et précises que les méthodes scalaires. L'utilisation de microcontrôleurs et de dispositifs de traitement de signal (« DSP Digital Signal Processor » en langue anglaise) a permis l'implémentation des méthodes vectorielles.

De plus, l'utilisation d'une batterie limite les commandes possibles. On ne peut pas atteindre n'importe quelle consigne à cause de ces limitations. Une consigne située en dehors de l'espace atteignable est souvent génératrice d'instabilité.

En marge de l'élaboration de la commande, il apparaît donc un autre problème dû au fait que l'on ne peut pas appliquer n'importe quelle tension comme commande. Ceci doit être pris en compte lors de l'élaboration de la commande comme une contrainte supplémentaire.

De l'état de la technique, on connaît les documents suivants.

Le document FR2800935 divulgue une stratégie de commande robuste avec orientation du flux rotorique pour une machine asynchrone. La robustesse de cette stratégie réside dans la prise en compte de la chute de la tension statorique.

Le document US 2015/0032423 divulgue un estimateur de flux rotorique incluant un module de rotation vectorielle, un module de modulation de vecteur spatial, et un onduleur traitant le vecteur de tension de stator commandé pour produire une puissance électrique pilotant moteur à induction. Le module de rotation vectorielle transforme le vecteur de tension de stator commandé du cadre de référence de flux de stator au cadre de référence de tension de phase, en appliquant une rotation vectorielle selon l'angle de flux de stator. L'angle de flux statorique est estimé plutôt que détecté, et est généré dans l'estimateur de flux et de couple. Le document CN 101 931 361 divulgue également un estimateur d'angle statorique par estimation du flux statorique.

Le document FR2779017 divulgue une méthode de contrôle avec orientation du flux rotorique pour un moteur asynchrone. L'originalité de cette technique réside dans la manière où le flux rotorique est reconstitué puis comparé avec une cartographie de flux en régime nominal pour agir ensuite sur le moteur électrique.

Le document EP0884835 divulgue un procédé de régulation de la vitesse dans lequel le flux rotorique est orienté pour une machine asynchrone. En se basant sur les caractéristiques de la machine, les forces électromotrices et la fréquence statorique $\omega s$ sont déterminées. Cette méthode possède un inconvénient majeur, car elle est tributaire des paramètres physiques de la machine qui sont susceptibles d'évoluer au cours de la vie du véhicule.

Le document EP0840441 divulgue des stratégies classiques de commande avec orientation du flux rotorique pour des machines asynchrones. Le but du document n'est pas l'élaboration des commandes mais plutôt la gestion de la saturation de ces commandes. De ce fait, le procédé se déclenche quand les commandes Ud et Uq atteignent des seuils prédéfinis.

Le document EP0883511 divulgue l'élaboration de consignes dans le repère de base (abc) (système de référence sinusoïdal triphasé). Le bloc des consignes contient aussi la fréquence de rotor (fréquence de glissement) et l'amplitude des courants en fonction de la valeur de la consigne du couple souhaitée. C'est en imposant une fréquence de glissement, qu'on impose la fréquence des consignes de courants.

On trouve aussi dans les documents EP0617505, EP0461511 et EP0047893 des stratégies de commande à flux orienté pour des machines asynchrones.

Un but de l'invention est de déterminer des commandes vectorielles à orientation du flux rotorique pour une machine électrique asynchrone.

Un autre but de l'invention est d'assurer la stabilité des courants dans la machine malgré les limitations en tension.

Un objet de l'invention est un procédé de commande d'une machine électrique asynchrone d'un groupe motopropulseur d'un véhicule automobile à traction électrique ou hybride. Le procédé comprend les étapes suivantes :

> on détermine une requête de couple et la vitesse de rotation de la machine électrique asynchrone,
> on détermine une requête de flux du rotor en fonction d'une cartographie dépendant de la requête de couple et de la vitesse de rotation,
> on détermine une requête de composante en quadrature du courant statorique en fonction de la requête de flux du rotor et de la requête de couple,
> on détermine la requête de composante directe du courant statorique en fonction de la requête de flux du rotor,
> on détermine l'angle que forme le champ tournant par rapport à un repère fixe par rapport au stator en fonction de la requête de flux du rotor, de la requête de composante en quadrature du courant statorique, de la pulsation rotorique, du nombre de paires de pôles de la machine électrique et de la vitesse mécanique de rotation,
> on détermine la composante quadratique de la tension statorique en fonction d'une combinaison des requêtes des composantes quadratique et directe du courant statorique,
> on détermine la composante directe de la tension statorique en fonction d'une autre combinaison des requêtes des composantes directe et quadratique du courant statorique,
> on détermine les valeurs de tensions du stator dans le repère triphasé en fonction des composantes directe et en quadrature des tensions statoriques dans le repère de Park et de l'angle que forme le champ tournant par rapport au repère fixe par rapport au stator,
> on transmet les valeurs de tensions triphasées du stator ainsi déterminées au moyen de commande de l'onduleur d'alimentation de la machine électrique.

Pour déterminer l'angle que forme le champ tournant par rapport au repère fixe par rapport au stator, on peut réaliser les étapes suivantes :

> on détermine la pulsation rotorique en fonction de la requête de flux du rotor et de la requête de composante en quadrature du courant statorique,
> on détermine la pulsation statorique en fonction de la pulsation rotorique et du produit du nombre de paires de pôles de la machine électrique par la vitesse de rotation,
> on détermine l'angle que forme le champ tournant par rapport au repère fixe par rapport au stator par intégration de la pulsation statorique par rapport au temps.

Le procédé peut également comprendre les étapes suivantes :

> on mesure les courants du stator dans le repère triphasé,
> on détermine des mesures de courants du stator dans le repère de Park en fonction des mesures de courants du stator dans le repère triphasé et de l'angle que forme le champ tournant par rapport au repère fixe par rapport au stator,
> on détermine une requête corrigée de composante quadratique du courant statorique en soustrayant la composante en quadrature du courant statorique de la requête de composante quadratique du courant statorique,
> on détermine une requête corrigée de composante directe du courant statorique en soustrayant la composante directe du courant statorique de la requête de composante directe du courant statorique, et
> on substitue les requêtes corrigées de composante directe et en quadrature du courant statorique aux requêtes de composante directe et en quadrature du courant statorique employées pour déterminer la composante quadratique de la tension statorique et la composante directe de la tension statorique.

Un autre objet de l'invention est un système de commande d'une machine électrique asynchrone d'un groupe motopropulseur d'un véhicule automobile à traction électrique ou hybride. Le système comprend un moyen de détermination de la volonté du conducteur, apte à déterminer une requête de couple en fonction de la volonté du conducteur, un moyen de détermination d'une requête de flux du rotor en fonction d'une cartographie dépendant de la requête de couple et de la vitesse de rotation, un moyen de détermination d'une requête de composante en quadrature du courant statorique en fonction de la requête de flux du rotor et la requête de couple, un moyen de détermination de la pulsation rotorique en fonction de la requête de flux du rotor et la requête de composante en quadrature du courant statorique, un moyen de détermination d'une requête de composante directe du courant statorique en fonction de la requête de flux du rotor, un moyen de détermination de l'angle que forme le champ tournant par rapport au repère fixe par rapport au stator en fonction de la vitesse mécanique de rotation et de la pulsation rotorique, un premier moyen de calcul apte à déterminer la composante quadratique de la tension statorique en fonction d'une combinaison de requêtes des composantes directe et en quadrature du courant statorique, un deuxième moyen de calcul apte à déterminer la composante directe de la tension statorique en fonction d'une autre combinaison des requêtes des composantes directe et en quadrature du courant statorique, un moyen de détermination des valeurs de tensions du stator dans le repère triphasé en fonction des composantes directe et en quadrature des tensions statoriques dans le repère de Park et de l'angle que forme le champ tournant par rapport au repère fixe par rapport au stator, les valeurs de tensions triphasées du stator étant transmises au moyen de commande de l'onduleur d'alimentation de la machine électrique.

Le moyen de détermination de l'angle que forme le champ tournant par rapport au repère fixe par rapport au stator peut comprendre un multiplicateur de la vitesse mécanique de rotation par le nombre de pôles magnétiques, un sommateur apte à déterminer la pulsation statorique en fonction de la pulsation rotorique et du produit de la vitesse mécanique de rotation par le nombre de pôles magnétiques, un intégrateur apte à déterminer l'angle que forme le champ tournant par rapport au repère fixe par rapport au stator par intégration de pulsation statorique.

Le système peut également comprendre un moyen de mesure des courants du stator dans le repère triphasé, un moyen de détermination de mesures de courants du stator dans le repère de Park en fonction de courants mesurés du stator dans le repère triphasé et de l'angle que forme le champ tournant par rapport au repère fixe par rapport au stator, un premier soustracteur apte à déterminer une requête corrigée de composante quadratique du courant statorique en soustrayant la composante en quadrature du courant statorique de la requête de composante quadratique du courant statorique, un deuxième soustracteur apte à déterminer une requête corrigée de composante directe du courant statorique en soustrayant la composante directe du courant statorique de la requête de composante directe du courant statorique, le premier soustracteur et le deuxième soustracteur substituant les requêtes corrigées de composante directe et en quadrature du courant statorique aux requêtes de composante directe et en quadrature du courant statorique transmises aux premier moyen de calcul de la composante quadratique de la tension statorique et au deuxième moyen de calcul de la composante directe de la tension statorique.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les repères triphasés et diphasés,
- la figure 2 illustre l'angle que forme le champ tournant par rapport au repère fixe par rapport au stator, l'angle mécanique, et l'angle que forme le champ tournant par rapport au repère fixe par rapport au rotor,
- la figure 3 illustre les principaux éléments d'un système de commande d'une machine électrique asynchrone d'un groupe motopropulseur d'un véhicule automobile à traction électrique ou hybride, et
- la figure 4 illustre les principales étapes d'un procédé de commande d'une machine électrique asynchrone d'un groupe motopropulseur d'un véhicule automobile à traction électrique ou hybride.

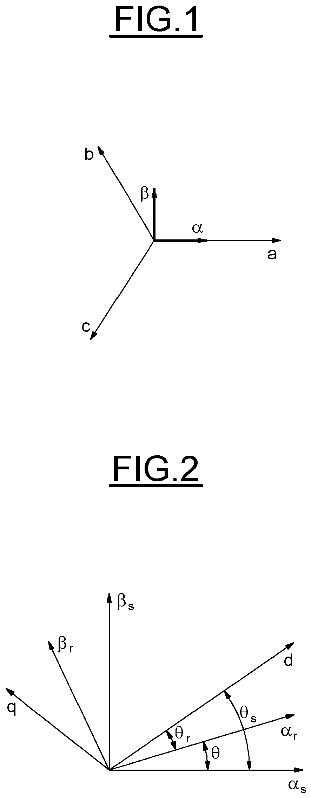

Pour la suite de la description on utilisera de préférence la transformation de Clarke plutôt que celle de Concordia pour passer des grandeurs triphasées (a,b,c) aux grandeurs diphasées ($\alpha,\beta$). La figure 1 illustre ces deux repères. Ce choix de matrice de passage non normée permet de faciliter la commande en traitant des grandeurs directes d ou en quadrature q, par exemple les courants de source $I_{ds}$ et $I_{qs}$. Cela permet également, par exemple, d'estimer directement le module du courant qui est absorbé par la machine électrique, sans avoir à passer par un coefficient multiplicateur.

Les équations suivantes décrivent le passage entre le repère des grandeurs triphasées (a,b,c) et le repère diphasé ($\alpha,\beta$).

$$\begin{bmatrix} x_a \\ x_b \\ x_c \end{bmatrix} = \overrightarrow{C_{23}} \cdot \begin{bmatrix} x_\alpha \\ x_\beta \end{bmatrix} \qquad (Eq. 1)$$

Avec

$$C_{23} = \frac{2}{3} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix}$$

$$\begin{bmatrix} x_\alpha \\ x_\beta \end{bmatrix} = \overrightarrow{C_{32}} \cdot \begin{bmatrix} x_a \\ x_b \\ x_c \end{bmatrix} \qquad (Eq. 2)$$

Avec

$$C_{32} = \begin{bmatrix} 1 & 0 \\ -\dfrac{1}{2} & \dfrac{\sqrt{3}}{2} \\ -\dfrac{1}{2} & -\dfrac{\sqrt{3}}{2} \end{bmatrix}$$

Les équations suivantes décrivent le passage entre le repère diphasé ($\alpha,\beta$) et le repère de Park (d,q).

$$\begin{bmatrix} x_\alpha \\ x_\beta \end{bmatrix} \vec{P} \begin{bmatrix} x_d \\ x_q \end{bmatrix} \text{ avec } P = \begin{bmatrix} \cos(\theta_s) & -\sin(\theta_s) \\ \sin(\theta_s) & \cos(\theta_s) \end{bmatrix} \qquad (Eq.\ 3)$$

$$\begin{bmatrix} x_d \\ x_q \end{bmatrix} \vec{P}^{-1} \begin{bmatrix} x_\alpha \\ x_\beta \end{bmatrix} \text{ avec } P^{-1} = \begin{bmatrix} \cos(\theta_s) & \sin(\theta_s) \\ -\sin(\theta_s) & \cos(\theta_s) \end{bmatrix} \qquad (Eq.\ 4)$$

Dans ce qui suit, le repère ($\alpha_s$, $\beta_s$) est fixe et lié au stator, le repère ($\alpha_r$, $\beta_r$), quant à lui, est fixé au rotor. Enfin, le repère (d, q) est lié au champ magnétique tournant.

Il apparaît clairement ensuite que le repère de la transformation de Park des grandeurs statoriques et celles des grandeurs rotoriques doivent coïncider pour simplifier les équations.

Ceci se fait en liant les angles $\theta_s$ et $\theta_r$ par la relation :

$$\theta_s = \theta + \theta_r \qquad (Eq.\ 5)$$

avec :

$\theta_s$ : l'angle que forme le champ tournant par rapport au repère (as, $\beta_s$) fixe par rapport au stator,
$\theta$ : l'angle mécanique, et
$\theta_r$ : l'angle que forme le champ tournant par rapport au repère (ar, $\beta_r$) fixe par rapport au rotor.

Ces angles sont illustrés par la figure 2

Les flux dans ce système d'axes s'écrivent de la façon suivante :

$$\begin{cases} \varphi_{ds} = L_s I_{ds} + M I_{dr} \\ \varphi_{qs} = L_s I_{qs} + M I_{qr} \\ \varphi_{dr} = L_r I_{dr} + M I_{ds} \\ \varphi_{qr} = L_r I_{qr} + M I_{qs} \end{cases} \qquad (Eq.\ 6)$$

Avec

cpds : la composante directe d du flux statorique,
$\varphi_{qs}$ : la composante en quadrature q du flux statorique,
cpdr : la composante directe d du flux rotorique,
$\varphi_{qr}$ : la composante en quadrature q du flux rotorique,
$L_s$ : l'inductance du stator,
$L_r$ : l'inductance du rotor,
M : l'inductance mutuelle,

$I_{ds}$ : la composante directe d du courant statorique,

$I_{qs}$ : la composante en quadrature q du courant statorique,

$I_{dr}$ : la composante directe d du courant rotorique, et

$I_{qr}$ : la composante en quadrature q du courant rotorique.

Le couple électromagnétique Ce est déterminé par application de l'équation suivante :

$$C_e = \frac{3}{2} p \left( \varphi_{ds} I_{qs} - \varphi_{qs} I_{ds} \right) \qquad (Eq.\ 7)$$

avec p= nombre de paires de pôles

La commande de la machine électrique peut être décrite dans un référentiel lié au champ tournant. Dans ce cas, la pulsation statorique $\omega_s$ est définie par l'équation suivante :

$$\omega_s = \dot{\theta}_s \qquad (Eq.\ 8)$$

La pulsation rotorique $\omega_r$ est définie par l'équation suivante :

$$\omega_r = \dot{\theta}_r \qquad (Eq.\ 9)$$

La pulsation mécanique $\omega$ est définie par l'équation suivante :

$$\omega = \omega_s - \omega_r = \dot{\theta} = p\Omega \qquad (Eq.\ 10)$$

Avec $\Omega$ : la vitesse de rotation mécanique.

On peut alors écrire :

$$\begin{cases} V_{ds} = R_s I_{ds} + \dfrac{d\varphi_{ds}}{dt} - \omega_s \varphi_{qs} \\[2mm] V_{qs} = R_s I_{qs} + \dfrac{d\varphi_{qs}}{dt} - \omega_s \varphi_{ds} \\[2mm] 0 = R_r I_{dr} + \dfrac{d\varphi_{dr}}{dt} - \omega_r \varphi_{qr} \\[2mm] 0 = R_r I_{qr} + \dfrac{d\varphi_{qr}}{dt} - \omega_r \varphi_{dr} \end{cases} \qquad (Eq.\ 11)$$

Avec :

Vds : la composante directe d de la tension appliquée au stator,

$V_{qs}$ : la composante en quadrature q de la tension appliquée au stator,

$R_s$ représente la résistance du stator de la machine, et

$R_r$ représente la résistance du rotor de la machine.

L'avantage d'utiliser ce référentiel, est d'avoir des grandeurs constantes en régime permanent. Il est alors plus aisé d'en faire la régulation.

La commande de la machine électrique peut être décrite dans un référentiel lié au stator. Dans ce cas les repères (as,ps) et (d,q) sont confondus. On a alors le système d'équations suivant :

$$\begin{cases} \dot{\theta}_s = 0 \\ \dot{\theta}_r = -\dot{\theta} = -p\Omega \end{cases} \qquad (\text{Eq. 12})$$

En combinant les équations Eq. 11 et Eq. 12, on peut alors écrire le système d'équations suivant :

$$\begin{cases} V_{ds} = R_s I_{ds} + \dfrac{d\varphi_{ds}}{dt} \\[2mm] V_{qs} = R_s I_{qs} + \dfrac{d\varphi_{qs}}{dt} \\[2mm] 0 = R_r I_{dr} + \dfrac{d\varphi_{dr}}{dt} + p\Omega\varphi_{qr} \\[2mm] 0 = R_r I_{qr} + \dfrac{d\varphi_{qr}}{dt} - p\Omega\varphi_{dr} \end{cases} \qquad (\text{Eq. 13})$$

On ajoute par ailleurs l'équation mécanique suivante:

$$C_e - C_r - J\frac{d\Omega}{dt} = 0 \qquad (\text{Eq. 14})$$

Avec :

$C_r$ : le couple résistant
$J$ : l'inertie de la machine électrique.

En modélisant la machine de cette manière, on réduit le nombre de grandeurs dont on a besoin de connaître la valeur pour pouvoir commander le fonctionnement de la machine. En effet, seules les valeurs instantanées des tensions statoriques doivent être déterminées pour les imposer à la machine.

Il n'est donc pas nécessaire de connaître la valeur des autres grandeurs telles que la pulsation statorique ou le glissement comme dans d'autres modèles, notamment celui lié à un référentiel tournant au synchronisme (Eq. 8 à Eq. 9).

Pour commander des machines asynchrones, il est possible d'utiliser une commande dite vectorielle. Le but de la commande vectorielle est de commander la machine asynchrone comme une machine à courant continu à excitation indépendante laquelle comprend un découplage entre la grandeur commandant le flux, le courant d'excitation, et celle liée au couple, le courant d'induit. Ce découplage est inhérent à la conception de la machine à excitation indépendante et permet d'obtenir une réponse très rapide du couple lors d'une commande.

Pour cela, on oriente le repère de Park d-q de sorte que l'axe d soit en phase avec le flux, c'est-à-dire :

$$\begin{cases} \varphi_d = \varphi \\ \varphi_q = 0 \end{cases} \qquad (\text{Eq. 15})$$

La commande vectorielle ainsi obtenue est dite à orientation du flux rotorique. Elle permet d'éliminer l'influence des réactances de fuite rotorique et statorique et donne de meilleurs résultats que les méthodes basées sur l'orientation du flux statorique.

Les conditions de l'équation Eq. 15 peuvent être transposées à la commande de la machine électrique en fixant

$$\varphi_r = \varphi_{dr}$$
$$\varphi_{qr} = 0 \qquad (\text{Eq. 16})$$

Les équations de la machine dans un référentiel lié au champ tournant (Eq. 13) deviennent alors :

$$\varphi_r = \varphi_{dr}$$

$$\begin{cases} V_{ds} = R_s I_{ds} + \sigma L_s \dfrac{dI_{ds}}{dt} + \dfrac{M}{L_r} \dfrac{d\varphi_r}{dt} - \omega_s \sigma L_s I_{ds} \\ \\ V_{qs} = R_s I_{qs} + \sigma L_s \dfrac{dI_{qs}}{dt} + \omega_s \dfrac{M}{L_r} \varphi_r + \omega_s \sigma L_s I_{ds} \end{cases} \qquad (\text{Eq. } 17)$$

$$\tau_r \frac{d\varphi_r}{dt} + \varphi_r = M I_{ds}$$

$$\omega_r = \frac{M}{\tau_r \varphi_r} I_{qs}$$

$$C_e = \frac{3}{2} p \frac{M}{L_r} \varphi_r I_{qs}$$

Avec :

$\tau_r$ : la constante de temps rotorique.

Par ailleurs, il existe des méthodes de commande vectorielle directes et indirectes.

Dans la commande indirecte, l'angle de Park $\theta_s$ est calculé à partir de la pulsation statorique, elle-même reconstituée à l'aide de la vitesse de la machine et de la pulsation rotorique $\omega_r$.

En ce qui concerne la commande directe, l'angle de Park est calculé directement à l'aide des grandeurs mesurées ou estimées.

La commande vectorielle est dite à boucle ouverte s'il n'y a pas de régulation de flux. Le flux est imposé dans ce cas par le courant $I_{ds}$. La pulsation statorique $\omega s$, dérivée de l'angle $\theta s$ entre le champ magnétique et le repère lié au stator, peut alors uniquement être estimée par la relation suivante :

$$\theta_s = \int \left( p\Omega + \frac{I_{qs}^{\#}}{\tau_r I_{ds}^{\#}} \right) dt \qquad (\text{Eq. } 18)$$

Avec :

$$I_{ds}^{\#} = \frac{\varphi_r^{\#}}{M}$$

$$\varphi_r^{\#} = f(\Omega)$$

$$I_{qs}^{\#} = \frac{2L_r}{3pM\varphi_r} C_e$$

f : Cartographie en fonction de la vitesse de rotation mécanique, issue d'une optimisation énergétique de la machine.

La commande vectorielle est dite à boucle fermée, si la pulsation statorique est estimée à partir de la valeur du flux rotorique ou du courant magnétisant. Les deux méthodes (boucle ouverte ou fermé) sont compatibles avec l'invention

En orientant le flux rotorique, on obtient le modèle suivant :

$$V_{ds} = R_s I_{ds} + \sigma L_s \frac{dI_{ds}}{dt} + \frac{M}{L_r} \frac{d\varphi_r}{dt} - \omega_s \sigma L_s I_{ds}$$

$$\text{(Eq. 19)}$$

$$V_{qs} = R_s I_{qs} + \sigma L_s \frac{dI_{qs}}{dt} + \omega_s \frac{M}{L_r} \varphi_r + \omega_s \sigma L_s I_{ds}$$

$$\tau_r \frac{d\varphi_r}{dt} + \varphi_r = MI_{ds}$$

Les tensions $V_{ds}$ et $V_{qs}$ stabilisent la machine autour d'un point de fonctionnement désiré. Elles sont déterminées par application des équations suivantes :

$$\begin{pmatrix} V_{ds} \\ V_{qs} \end{pmatrix} = \begin{pmatrix} \dfrac{R_s}{s} + \sigma L_s & -\dfrac{\omega_s \sigma L_s}{s} \\ \dfrac{\omega_s \sigma L_s}{s} & \dfrac{R_s}{s} + \sigma L_s \end{pmatrix} \begin{pmatrix} -K_d\left(I_{ds} - I_{ds}^{\#}\right) \\ -K_q\left(I_{qs} - I_{qs}^{\#}\right) \end{pmatrix} = \begin{pmatrix} \mathrm{Re}\,g1 \\ \mathrm{Re}\,g2 \end{pmatrix} \quad \text{(Eq. 20)}$$

Avec :

$K_d$ et $K_q$ : des paramètres de réglage ;
s : la variable de Laplace.

$$\sigma = L_s - \frac{M^2}{L_r}$$

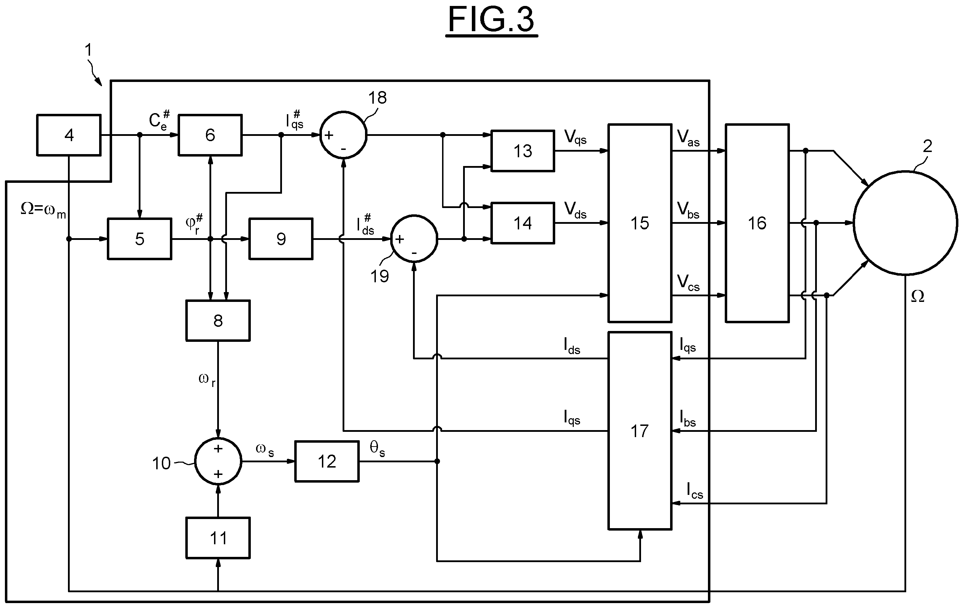

La figure 3 illustre les principaux éléments d'un système de commande 1 apte à déterminer les tensions ($V_{ds}$, $V_{qs}$) d'alimentation d'une machine électrique asynchrone 2 pour une commande vectorielle selon l'invention.
Pour cela, un moyen de détermination 4 de la volonté du conducteur, tel un capteur d'enfoncement de la pédale d'accélérateur, émet une requête de couple $C_e^{\#}$ en fonction de la volonté du conducteur.

La requête de couple $C_e^{\#}$ est reçue en entrée d'un moyen 5 de détermination d'une requête de flux du rotor $\varphi_r^{\#}$ en fonction d'une cartographie dépendant de la requête de couple $C_e^{\#}$ et de la vitesse de rotation $\Omega$.

La requête de flux du rotor $\varphi_r^{\#}$ et la requête de couple $C_e^{\#}$ sont reçues par un moyen 6 de détermination d'une requête de composante en quadrature q du courant statorique $I_{qs}^{\#}$ par application de l'équation Eq. 17.

La requête de flux du rotor $\varphi_r^{\#}$ et la requête de composante en quadrature q du courant statorique $I_{qs}^{\#}$ sont reçues par un moyen 8 de détermination de la pulsation rotorique $\omega_r$ par application de l'équation Eq. 16.

La requête de flux du rotor $\varphi_r^{\#}$ est reçue par un moyen 9 de détermination de la requête de composante directe d du courant statorique $I_{ds}^{\#}$ par application de l'équation Eq. 18.
Un sommateur 10 reçoit sur ses entrées la pulsation rotorique $\omega_r$ et le produit p*Q issu d'un multiplicateur 11 de la vitesse de rotation $\Omega$ recue en entrée par le nombre p de pôles magnétiques.
Le sommateur 10 émet en sortie la pulsation statorique $\omega_s$ à destination d'un intégrateur 12 qui émet en sortie l'angle $\theta_s$ que forme le champ tournant par rapport au repère (as, $\beta_s$) fixe par rapport au stator.
Un premier moyen de calcul 13 détermine la composante quadratique de la tension statorique $V_{qs}$ par application de l'équation Eq. 19 en fonction d'une combinaison des requêtes corrigées des composantes quadratique et directe du courant statorique $I_{qs\_c}^{\#}$ et $I_{ds\_c}^{\#}$ .
Un deuxième moyen de calcul 14 détermine la composante directe de la tension statorique Vds par application de l'équation Eq. 20 en fonction d'une combinaison des requêtes corrigées des composantes directe et quadratique du courant statorique $I_{ds\_c}^{\#}$ et $I_{qs\_c}^{\#}$.

Un moyen de détermination 15 des valeurs de tensions du stator dans le repère triphasé applique les équations Eq. 2 et Eq. 4 afin de passer du repère de Park au repère triphasé. Les valeurs de tensions triphasées du stator ainsi déterminées sont transmises au moyen de commande (non représenté) de l'onduleur d'alimentation 16 de la machine électrique 2 afin de générer les tensions correspondantes.

Un moyen de détermination 17 des mesures de courants du stator dans le repère de Park applique les équations Eq. 1 et Eq. 3 afin de passer du repère de triphasé au repère de Park.

La composante en quadrature du courant statorique $I_{qs}$ ainsi déterminée est transmise à un premier soustracteur 18 qui corrige la requête de composante quadratique du courant statorique $I_{qs}^{\#}$ en soustrayant la composante en quadrature du courant statorique $I_{qs}$ afin d'obtenir la requête corrigée de composante quadratique du courant statorique $I_{qs\_c}^{\#}$.

La composante directe du courant statorique $I_{ds}$ ainsi déterminée est transmise à un deuxième soustracteur 19 qui corrige la requête de composante directe du courant statorique $I_{ds}^{\#}$ en soustrayant la composante directe du courant statorique $I_{ds}$ afin d'obtenir la requête corrigée de composante directe du courant statorique $I_{ds\_c}^{\#}$.

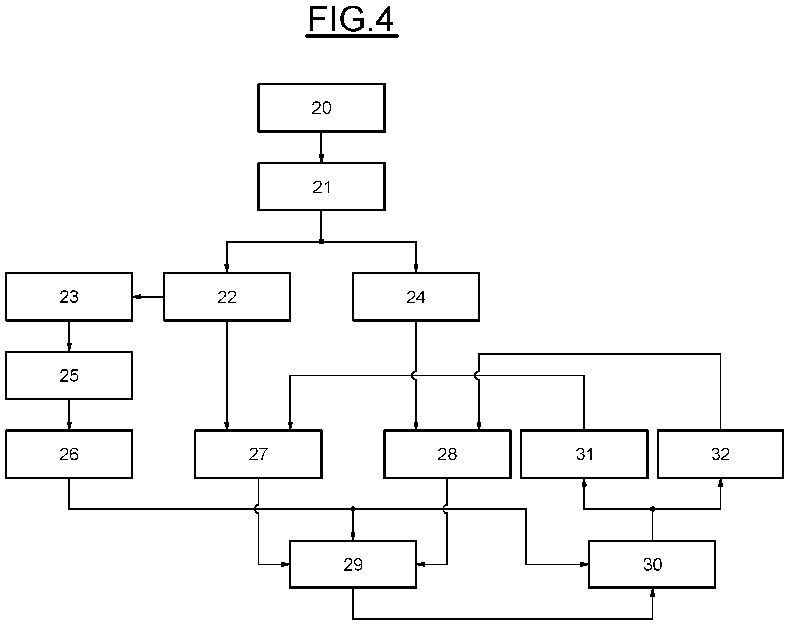

La figure 4 illustre les principales étapes d'un procédé de commande permettant de déterminer les tensions ($V_{ds}$, $V_{qs}$) d'alimentation d'une machine électrique asynchrone 2 pour une commande vectorielle selon l'invention

Le procédé débute par une étape 20, au cours de laquelle on détermine une requête de couple $C_e^{\#}$ en fonction de la volonté du conducteur manifestée par différents moyens, tel un capteur d'enfoncement de la pédale d'accélérateur.

Au cours d'une étape 21, on détermine une requête de flux du rotor $\varphi_r^{\#}$ en fonction d'une cartographie dépendant de la requête de couple $C_e^{\#}$ et de la vitesse de rotation mécanique $\Omega$.

Au cours d'une étape 22, on détermine une requête de composante en quadrature q du courant statorique $I_{qs}^{\#}$ par application de l'équation Eq. 18 en fonction de la requête de couple $C_e^{\#}$ et la requête de flux du rotor $\varphi_r^{\#}$.

Au cours d'une étape 23, on détermine la pulsation rotorique $\omega_r$ en fonction de la requête de flux du rotor $\varphi_r^{\#}$ et de la requête de composante en quadrature q du courant statorique $I_{qs}^{\#}$ par application de l'équation Eq. 17.

Au cours d'une étape 24, on détermine la requête de composante directe d du courant statorique $I_{ds}^{\#}$ en fonction de la requête de flux du rotor $\varphi_r^{\#}$ par application de l'équation Eq. 18.

Au cours d'une étape 25, on détermine la pulsation statorique $\omega_s$ en fonction de la pulsation rotorique $\omega_r$ et du produit $p*\Omega$.

Au cours d'une étape 26, on détermine l'angle $\theta$s que forme le champ tournant par rapport au repère ($a_s$, $\beta_s$) fixe par rapport au stator par intégration de la pulsation statorique cos.

Au cours d'une étape 27, on détermine la composante quadratique de la tension statorique $V_{qs}$ par application de l'équation Eq. 20 en fonction d'une combinaison des requêtes corrigées des composantes quadratique et directe du courant statorique $I_{qs\_c}^{\#}$ et $I_{ds\_c}^{\#}$.

Au cours d'une étape 28, on détermine la composante directe de la tension statorique Vds par application de l'équation Eq. 20 en fonction d'une combinaison des requêtes corrigées des composantes directe et quadratique du courant statorique $I_{ds\_c}^{\#}$ et $I_{qs\_c}^{\#}$.

Au cours d'une étape 29, on détermine les valeurs de tensions du stator dans le repère triphasé en fonction des valeurs de tensions du stator dans le repère de Park, composantes directe et en quadrature des tensions statoriques en appliquant les équations Eq. 2 et Eq. 4 afin de passer du repère de Park au repère triphasé. Puis, on transmet les valeurs de tensions triphasées du stator ainsi déterminées sont transmises au moyen de commande (non représenté) de l'onduleur d'alimentation 16 de la machine électrique 2 afin de générer les tensions correspondantes.

Au cours d'une étape 30, on détermine des mesures de courants du stator dans le repère de Park en fonction de mesures de courants du stator dans le repère triphasé en appliquant les équations Eq. 1 et Eq. 3 afin de passer du repère de triphasé au repère de Park.

Au cours d'une étape 31, on détermine une requête corrigée de composante quadratique du courant statorique $I_{qs\_c}^{\#}$ en soustrayant la composante en quadrature du courant statorique $I_{qs}$ de la requête de composante quadratique du courant statorique $I_{qs}^{\#}$. $I_{qs\_c}^{\#}$ est assimilable à une requête d'erreur en courant que l'on cherche à minimiser.

Au cours d'une étape 32, on détermine une requête corrigée de composante directe du courant statorique $I_{ds\_c}^{\#}$ en soustrayant la composante directe du courant statorique $I_{ds}$ de la requête de composante directe du courant statorique $I_{ds}^{\#}$. $I_{ds\_c}^{\#}$ est assimilable à une requête d'erreur en courant que l'on cherche à minimiser.

**Revendications**

1. Procédé de commande d'une machine électrique asynchrone d'un groupe motopropulseur d'un véhicule automobile à traction électrique ou hybride comprenant les étapes suivantes :

   on détermine une requête de couple ($C_e^{\#}$) et la vitesse mécanique de rotation (Q) de la machine électrique asynchrone,
   on détermine une requête de flux du rotor ($\varphi_r^{\#}$) en fonction d'une cartographie dépendant de la requête de couple ($C_e^{\#}$) et de la vitesse de rotation ($\Omega$),
   on détermine une requête de composante en quadrature du courant statorique ($I_{qs}^{\#}$) en fonction de la requête de flux du rotor ($\varphi_r^{\#}$) et de la requête de couple ($C_e^{\#}$),
   on détermine une requête de composante directe du courant statorique ($I_{ds}^{\#}$) en fonction de la requête de flux du rotor ($\varphi_r^{\#}$),
   on détermine l'angle que forme le champ tournant ($\Theta_s$) par rapport à un repère fixe par rapport au stator en fonction de la requête de flux du rotor ($\varphi_r^{\#}$), de la requête de composante en quadrature du courant statorique ($I_{qs}^{\#}$), de la pulsation rotorique ($\omega_r$), du nombre (p) de paires de pôles de la machine électrique et de la vitesse mécanique de rotation ($\Omega$),
   on détermine la composante quadratique ($V_{qs}$) de la tension statorique en fonction d'une combinaison des requêtes des composantes quadratique ($I_{qs}^{\#}$) et directe ($I_{ds}^{\#}$) du courant statorique,
   on détermine la composante directe ($V_{ds}$) de la tension statorique en fonction d'une autre combinaison des requêtes des composantes directe ($I_{ds}^{\#}$) et quadratique ($I_{qs}^{\#}$) du courant statorique,
   on détermine les valeurs de tensions du stator dans le repère triphasé en fonction des composantes directe ($V_{ds}$) et en quadrature ($V_{qs}$) des tensions statoriques dans le repère de Park et de l'angle ($\Theta_s$) que forme le champ tournant par rapport au repère fixe par rapport au stator,
   on transmet les valeurs de tensions triphasées du stator ainsi déterminées au moyen de commande de l'onduleur d'alimentation (16) de la machine électrique (2).

2. Procédé selon la revendication 1, dans lequel, pour déterminer l'angle ($\Theta_s$) que forme le champ tournant par rapport au repère fixe par rapport au stator,

   on détermine la pulsation rotorique ($\omega_r$) en fonction de la requête de flux du rotor ($\varphi_r^{\#}$) et de la requête de composante en quadrature du courant statorique ($I_{qs}^{\#}$),
   on détermine la pulsation statorique ($\omega_s$) en fonction de la pulsation rotorique ($\omega_r$) et du produit du nombre (p) de paires de pôles de la machine électrique par la vitesse de rotation ($\Omega$),
   on détermine l'angle ($\Theta_s$) que forme le champ tournant par rapport au repère fixe par rapport au stator par intégration de la pulsation statorique ($\omega_s$) par rapport au temps.

3. Procédé selon la revendication 2, comprenant en outre les étapes suivantes :

   on mesure les courants du stator dans le repère triphasé,
   on détermine des mesures de courants du stator dans le repère de Park en fonction des mesures de courants du stator dans le repère triphasé et de l'angle ($\Theta_s$) que forme le champ tournant par rapport au repère fixe par rapport au stator,
   on détermine une requête corrigée $\left( I_{qs\_c}^{\#} \right)$ de composante quadratique du courant statorique en soustrayant la composante en quadrature du courant statorique de la requête de composante quadratique du courant statorique ($I_{qs}^{\#}$),

on détermine une requête corrigée ($I_{ds\_c}^{\#}$) de composante directe du courant statorique en soustrayant la composante directe du courant statorique de la requête de composante directe du courant statorique ($I_{qs}^{\#}$), et

on substitue les requêtes corrigées de composante directe et en quadrature du courant statorique aux requêtes de composante directe et en quadrature du courant statorique employées pour déterminer la composante quadratique de la tension statorique et la composante directe de la tension statorique.

4. Système de commande d'une machine électrique asynchrone d'un groupe motopropulseur d'un véhicule automobile à traction électrique ou hybride comprenant

un moyen de détermination (4) de la volonté du conducteur, apte à déterminer une requête de couple ($C_e^{\#}$) en fonction de la volonté du conducteur,

un moyen (5) de détermination d'une requête de flux du rotor ($\varphi_r^{\#}$) en fonction d'une cartographie dépendant de la requête de couple ($C_e^{\#}$) et de la vitesse de rotation ($\Omega$),

un moyen (6) de détermination d'une requête de composante en quadrature q du courant statorique ($I_{qs}^{\#}$) en fonction de la requête de flux du rotor ($\varphi_r^{\#}$) et la requête de couple ($C_e^{\#}$),

un moyen (8) de détermination de la pulsation rotorique ($\omega_r$) en fonction de la requête de flux du rotor ($\varphi_r^{\#}$) et la requête de composante en quadrature q du courant statorique ($I_{qs}^{\#}$),

un moyen (9) de détermination d'une requête de composante directe du courant statorique ($I_{ds}^{\#}$) en fonction de la requête de flux du rotor ($\varphi_r^{\#}$),

un moyen de détermination (10,11,12) de l'angle ($\Theta_s$) que forme le champ tournant par rapport au repère fixe par rapport au stator en fonction de la vitesse mécanique de rotation (Q) et de la pulsation rotorique ($\omega_r$),

un premier moyen de calcul (13) apte à déterminer la composante quadratique ($V_{qs}$) de la tension statorique en fonction d'une combinaison des requêtes des composantes directe ($I_{ds}^{\#}$) et en quadrature ($I_{qs}^{\#}$) du courant statorique ,

un deuxième moyen de calcul (14) apte à déterminer la composante directe ($V_{ds}$) de la tension statorique en fonction d'une autre combinaison des requêtes des composantes directe ($I_{ds}^{\#}$) et en quadratique ($I_{qs}^{\#}$) du courant statorique,

un moyen de détermination (15) des valeurs de tensions du stator dans le repère triphasé en fonction des composantes directe et en quadrature des tensions statoriques dans le repère de Park et de l'angle que forme le champ tournant par rapport au repère fixe par rapport au stator,

les valeurs de tensions triphasées du stator étant transmises au moyen de commande de l'onduleur d'alimentation (16) de la machine électrique (2).

5. Système selon la revendication 4, dans lequel le moyen de détermination (10,11,12) de l'angle ($\Theta_s$) que forme le champ tournant par rapport au repère fixe par rapport au stator comprend

un multiplicateur (11) de la vitesse mécanique de rotation par le nombre de pôles magnétiques,

un sommateur (10) apte à déterminer la pulsation statorique ($\omega_s$) en fonction de la pulsation rotorique ($\omega_r$) et du produit de la vitesse mécanique de rotation (Q) par le nombre (p) de pôles magnétiques,

un intégrateur (12) apte à déterminer l'angle ($\Theta_s$) que forme le champ tournant par rapport au repère fixe par rapport au stator par intégration de pulsation statorique ($\omega_s$).

6. Système selon la revendication 5, comprenant

un moyen de mesure des courants du stator dans le repère triphasé,

un moyen de détermination (17) de mesures de courants du stator dans le repère de Park en fonction de courants mesurés du stator dans le repère triphasé et de l'angle ($\Theta_s$) que forme le champ tournant par rapport au repère fixe par rapport au stator,

un premier soustracteur (18) apte à déterminer une requête corrigée ($I_{qs\_c}^{\#}$) de composante quadratique du courant statorique en soustrayant la composante en quadrature du courant statorique de la requête de composante quadratique du courant statorique ($I_{qs}^{\#}$),

un deuxième soustracteur (19) apte à déterminer une requête corrigée ($I_{ds\_c}^{\#}$) de composante directe du courant statorique en soustrayant la composante directe du courant statorique de la requête de composante directe du courant statorique ($I_{ds}^{\#}$),

le premier soustracteur (18) et le deuxième soustracteur (19) substituant les requêtes corrigées de composante directe et en quadrature du courant statorique aux requêtes de composante directe et en quadrature du courant statorique transmises aux premier moyen de calcul (13) de la composante quadratique de la tension statorique et au deuxième moyen de calcul (14) de la composante directe de la tension statorique.

**Patentansprüche**

1. Verfahren zur Steuerung einer elektrischen Asynchronmaschine eines Antriebsstrangs eines Kraftfahrzeugs mit Elektro- oder Hybridantrieb, das die folgenden Schritte enthält:

   eine Drehmomentanforderung ($C_e$#) und die mechanische Drehzahl ($\Omega$) der elektrischen Asynchronmaschine werden bestimmt,
   eine Flussanforderung des Rotors ($\varphi_r$#) wird abhängig von einem von der Drehmomentanforderung ($C_e$#) und der Drehzahl ($\Omega$) abhängenden Kennfeld bestimmt,
   eine Anforderung einer Quadraturkomponente des Statorstroms ($I_{qs}$#) wird abhängig von der Flussanforderung des Rotors ($\varphi_r$#) und der Drehmomentanforderung ($C_e$#) bestimmt,
   eine Anforderung einer Mitkomponente des Statorstroms ($I_{qs}$#) wird abhängig von der Flussanforderung des Rotors ($\varphi_r$#) bestimmt,
   der Winkel ($\Theta_s$) , den das Drehfeld bezüglich eines bezüglich des Stators ortsfesten Bezugssystems bildet, wird abhängig von der Flussanforderung des Rotors ($\varphi_r$#) , der Anforderung einer Quadraturkomponente des Statorstroms ($I_{qs}$#), der Rotorkreisfrequenz ($\omega_r$) , der Anzahl (p) von Polpaaren der elektrischen Maschine und der mechanischen Drehzahl ($\Omega$) bestimmt,
   die quadratische Komponente ($V_{qs}$) der Statorspannung wird abhängig von einer Kombination der Anforderungen der quadratischen ($I_{qs}$#) und Mitkomponenten ($I_{ds}$#) des Statorstroms bestimmt,
   die Mitkomponente ($V_{ds}$) der Statorspannung wird abhängig von einer anderen Kombination der Anforderungen der Mit-($I_{ds}$#) und quadratischen Komponente ($I_{qs}$#) des Statorstroms bestimmt,
   die Werte von Spannungen des Stators im dreiphasigen Bezugssystem werden abhängig von der Mit- ($V_{ds}$) und Quadraturkomponente ($V_{qs}$) der Statorspannungen im Park-Bezugssystem und von dem Winkel ($\theta_s$) bestimmt, den das Drehfeld bezüglich des bezüglich des Stators ortsfesten Bezugssystems bildet,
   die so bestimmten Werte dreiphasiger Spannungen werden an die Steuereinrichtung des Versorgungswechselrichters (16) der elektrischen Maschine (2) übertragen.

2. Verfahren nach Anspruch 1, wobei zur Bestimmung des Winkels ($\theta_s$), den das Drehfeld bezüglich des bezüglich des Stators ortsfesten Bezugssystems bildet,

   die Rotorkreisfrequenz ($\omega_r$) abhängig von der Flussanforderung des Rotors ($\varphi_r$#) und der Anforderung einer Quadraturkomponente des Statorstroms ($I_{qs}$#) bestimmt wird,
   die Statorkreisfrequenz ($\omega_s$) abhängig von der Rotorkreisfrequenz ($\omega_r$) und dem Produkt aus der Anzahl (p) von Polpaaren der elektrischen Maschine und der Drehzahl ($\Omega$) bestimmt wird,
   der Winkel ($\theta_s$), den das Drehfeld bezüglich des bezüglich des Stators ortsfesten Bezugssystems bildet, durch Integration der Statorkreisfrequenz ($\omega_s$) in Bezug auf die Zeit bestimmt wird.

3. Verfahren nach Anspruch 2, das außerdem die folgenden Schritte enthält:

   die Ströme des Stators im dreiphasigen Bezugssystem werden gemessen,
   Messwerte von Strömen des Stators im Park-Bezugssystem werden abhängig von den Messwerten von Strömen des Stators im dreiphasigen Bezugssystem und von dem Winkel ($\theta_s$) bestimmt, den das Drehfeld bezüglich des bezüglich des Stators ortsfesten Bezugssystems bildet,
   eine korrigierte Anforderung ($I_{qs\_c}$#) einer quadratischen Komponente des Statorstroms wird bestimmt, indem die Quadraturkomponente des Statorstroms von der Anforderung einer quadratischen Komponente des Statorstroms ($I_{qs}$#) subtrahiert wird,
   eine korrigierte Anforderung ($I_{ds\_c}$#) einer Mitkomponente des Statorstroms wird bestimmt, indem die Mitkomponente des Statorstroms von der Anforderung einer Mitkomponente des Statorstroms ($I_{qs}$#) subtrahiert wird, und
   die korrigierten Anforderungen der Mitkomponente und der Quadraturkomponente des Statorstroms ersetzen die Anforderungen der Mitkomponente und der Quadraturkomponente des Statorstroms, die verwendet werden, um die quadratische Komponente der Statorspannung und die Mitkomponente der Statorspannung zu bestimmen.

4. Steuersystem einer elektrischen Asynchronmaschine eines Antriebsstrangs eines Kraftfahrzeug mit Elektro- oder Hybridantrieb, das enthält:

eine Bestimmungseinrichtung (4) der Absicht des Fahrers, die eine Drehmomentanforderung ($C_e^{\#}$) abhängig von der Absicht des Fahrers bestimmen kann,
eine Einrichtung (5) zur Bestimmung einer Flussanforderung des Rotors ($\varphi_r^{\#}$) abhängig von einem Kennfeld, das von der Drehmomentanforderung ($C_e^{\#}$) und der Drehzahl ($\Omega$) abhängt,
eine Einrichtung (6) zur Bestimmung einer Anforderung einer Quadraturkomponente q des Statorstroms ($I_{qs}^{\#}$) abhängig von der Flussanforderung des Rotors ($\varphi_r^{\#}$) und der Drehmomentanforderung ($C_e^{\#}$),
eine Einrichtung (8) zur Bestimmung der Rotorkreisfrequenz ($\omega_r$) abhängig von der Flussanforderung des Rotors ($\varphi_r^{\#}$) und der Anforderung einer Quadraturkomponente q des Statorstroms ($I_{qs}^{\#}$),
eine Einrichtung (9) zur Bestimmung einer Anforderung einer Mitkomponente des Statorstroms ($I_{ds}^{\#}$) abhängig von der Flussanforderung des Rotors ($\varphi_r^{\#}$),
eine Bestimmungseinrichtung (10, 11, 12) des Winkels ($\theta_s$), den das Drehfeld bezüglich des bezüglich des Stators ortsfesten Bezugssystems bildet, abhängig von der mechanischen Drehzahl ($\Omega$) und von der Rotorkreisfrequenz ($\omega_r$),
eine erste Recheneinrichtung (13), die die quadratische Komponente ($V_{qs}$) der Statorspannung abhängig von einer Kombination der Anforderungen der Mitkomponente ($I_{ds}^{\#}$) und der Quadraturkomponente ($I_{qs}^{\#}$) des Statorstroms bestimmen kann,
eine zweite Recheneinrichtung (14), die die Mitkomponente ($V_{ds}$) der Statorspannung abhängig von einer anderen Kombination der Anforderungen der Mitkomponente ($I_{ds}^{\#}$) und der Quadraturkomponente ($I_{qs}^{\#}$) des Statorstroms bestimmen kann,
eine Bestimmungseinrichtung (15) der Werte von Spannungen des Stators im dreiphasigen Bezugssystem abhängig von den Mit- und Quadraturkomponenten der Statorspannungen im Park-Bezugssystem und von dem Winkel, den das Drehfeld bezüglich des bezüglich des Stators ortsfesten Bezugssystems bildet,
wobei die Werte dreiphasiger Spannungen des Stators an die Steuereinrichtung des Versorgungswechselrichters (16) der elektrischen Maschine (2) übertragen werden.

5. System nach Anspruch 4, wobei die Bestimmungseinrichtung (10, 11, 12) des Winkels ($\theta_s$), den das Drehfeld bezüglich des bezüglich des Stators ortsfesten Bezugssystems bildet, enthält einen Multiplikator (11) der mechanischen Drehzahl mit der Anzahl von Magnetpolen,

ein Summierglied (10), das fähig ist, die Statorkreisfrequenz ($\omega_s$) abhängig von der Rotorkreisfrequenz ($\omega_r$) und dem Produkt aus der mechanischen Drehzahl ($\Omega$) und der Anzahl (p) von Magnetpolen zu bestimmen,
einen Integrator (12), der fähig ist, den Winkel ($\theta_s$), den das Drehfeld bezüglich des bezüglich des Stators ortsfesten Bezugssystems bildet, durch Integration einer Statorkreisfrequenz ($\omega_s$) zu bestimmen.

6. System nach Anspruch 5, das enthält eine Einrichtung zur Messung der Ströme des Stators im dreiphasigen Bezugssystem,

eine Bestimmungseinrichtung (17) von Messwerten von Strömen des Stators im Park-Bezugssystem abhängig von gemessenen Strömen des Stators im dreiphasigen Bezugssystem und von dem Winkel ($\theta_s$), den das Drehfeld bezüglich des bezüglich des Stators ortsfesten Bezugssystems bildet,
ein erstes Subtrahierglied (18), das fähig ist, eine korrigierte Anforderung ($I_{qs\_c}^{\#}$) einer quadratischen Komponente des Statorstroms durch Subtrahieren der Quadraturkomponente des Statorstroms von der Anforderung einer quadratischen Komponente des Statorstroms ($I_{qs}^{\#}$) zu bestimmen,
ein zweites Subtrahierglied (19), das fähig ist, eine korrigierte Anforderung ($I_{ds\_c}^{\#}$) einer Mitkomponente des Statorstroms durch Subtrahieren der Mitkomponente des Statorstroms von der Anforderung einer Mitkomponente des Statorstroms ($I_{ds}^{\#}$) zu bestimmen,
wobei das erste Subtrahierglied (18) und das zweite Subtrahierglied (19) die Anforderungen einer Mit- und Quadraturkomponente des Statorstroms, die an die erste Recheneinrichtung (13) der quadratischen Komponente der Statorspannung und an die zweite Recheneinrichtung (14) der Mitkomponente der Statorspannung übertragen werden, durch die korrigierten Anforderungen einer Mit- und Quadraturkomponente des Statorstroms ersetzen.

**Claims**

1. Method for controlling an asynchronous electric machine of a power train of an electric or hybrid traction motor vehicle, comprising the following steps:

   a request for torque ($C_e^\#$) and the mechanical rotational speed ($\Omega$) of the asynchronous electric machine are determined,

   a request for rotor flux ($\varphi_r^\#$) is determined as a function of a mapping dependent on the request for torque ($C_e^\#$) and on the rotational speed ($\Omega$),

   a request for the quadrature component of the stator current ($I_{qs}^\#$) is determined as a function of the request for rotor flux ($\varphi_r^\#$) and of the request for torque ($C_e^\#$), a request for the direct component of the stator current ($I_{ds}^\#$) is determined as a function of the request for rotor flux ($\varphi_r^\#$),

   the angle that the rotating field ($\Theta_s$) forms with respect to a reference frame that is fixed with respect to the stator is determined as a function of the request for rotor flux ($\varphi_r^\#$), of the request for the quadrature component of the stator current ($I_{qs}^\#$), of the rotor angular frequency ($\omega_r$), of the number (p) of pairs of poles of the electric machine and of the mechanical rotational speed ($\Omega$),

   the quadratic component ($V_{qs}$) of the stator voltage is determined as a function of a combination of requests for the quadratic ($I_{qs}^\#$) and direct ($I_{ds}^\#$) components of the stator current,

   the direct component ($V_{ds}$) of the stator voltage is determined as a function of another combination of requests for the direct ($I_{ds}^\#$) and quadratic ($I_{qs}^\#$) components of the stator current,

   the stator voltage values in the three-phase reference frame are determined as a function of the direct ($V_{ds}$) and quadrature ($V_{qs}$) components of the stator voltages in the Park reference frame and of the angle ($\Theta_s$) that the rotating field forms with respect to the reference frame that is fixed with respect to the stator,

   the three-phase stator voltage values thus determined are transmitted to the control means of the power supply inverter (16) of the electric machine (2).

2. Method according to Claim 1, in which, in order to determine the angle ($\Theta_s$) that the rotating field forms with respect to the reference frame that is fixed with respect to the stator,

   the rotor angular frequency ($\omega_r$) is determined as a function of the request for rotor flux ($\varphi_r^\#$) and of the request for the quadrature component of the stator current ($I_{qs}^\#$),

   the stator angular frequency ($\omega_s$) is determined as a function of the rotor angular frequency ($\omega_r$) and of the product of the number (p) of pairs of poles of the electric machine and the rotational speed ($\Omega$),

   the angle ($\Theta_s$) that the rotating field forms with respect to the reference frame that is fixed with respect to the stator is determined by integration of the stator angular frequency ($\omega_s$) with respect to time.

3. Method according to Claim 2, additionally comprising the following steps:

   the stator currents in the three-phase reference frame are measured,

   stator current measurements in the Park reference frame are determined as a function of the stator current measurements in the three-phase reference frame and of the angle ($\Theta_s$) that the rotating field forms with respect to the reference frame that is fixed with respect to the stator,

   a corrected request ($I_{qs\_c}^\#$) for the quadratic component of the stator current is determined by subtracting the quadrature component of the stator current from the request for the quadratic component of the stator current ($I_{qs}^\#$),

   a corrected request ($I_{ds\_c}^\#$) for the direct component of the stator current is determined by subtracting the direct component of the stator current from the request for the direct component of the stator current ($I_{qs}^\#$), and the corrected requests for the direct and quadrature components of the stator current are substituted for the requests for the direct and quadrature components of the stator current which are used to determine the quadratic component of the stator voltage and the direct component of the stator voltage.

4. System for controlling an asynchronous electric machine of a power train of an electric or hybrid traction motor vehicle, comprising:

   a means (4) for determining the will of the driver, suitable for determining a request for torque ($C_e^\#$) as a function of the will of the driver,

   a means (5) for determining a request for rotor flux ($\varphi_r^\#$) as a function of a mapping dependent on the request for torque ($C_e^\#$) and on the rotational speed ($\Omega$),

a means (6) for determining a request for the quadrature component q of the stator current ($I_{qs}$#) as a function of the request for rotor flux ($\varphi_r$#) and the request for torque ($C_e$#),

a means (8) for determining the rotor angular frequency ($\omega_r$) as a function of the request for rotor flux ($\varphi_r$#) and the request for the quadrature component q of the stator current ($I_{qs}$#),

a means (9) for determining a request for the direct component of the stator current ($I_{ds}$#) as a function of the request for rotor flux ($\varphi_r$#),

a means (10, 11, 12) for determining the angle ($\Theta_s$) that the rotating field forms with respect to the reference frame that is fixed with respect to the stator as a function of the mechanical rotational speed ($\Omega$) and of the rotor angular frequency ($\omega_r$),

a first calculation means (13) suitable for determining the quadratic component ($V_{qs}$) of the stator voltage as a function of a combination of requests for the direct ($I_{ds}$#) and quadrature ($I_{qs}$#) components of the stator current,

a second calculation means (14) suitable for determining the direct component ($V_{ds}$) of the stator voltage as a function of another combination of requests for the direct ($I_{ds}$#) and quadratic ($I_{qs}$#) components of the stator current,

a means (15) for determining the stator voltage values in the three-phase reference frame as a function of the direct and quadrature components of the stator voltages in the Park reference frame and of the angle that the rotating field forms with respect to the reference frame that is fixed with respect to the stator,

the three-phase stator voltage values being transmitted to the control means of the power supply inverter (16) of the electric machine (2).

5. System according to Claim 4, in which the means (10, 11, 12) for determining the angle ($\Theta_s$) that the rotating field forms with respect to the reference frame that is fixed with respect to the stator comprises a multiplier (11) of the mechanical rotational speed and the number of magnetic poles,

an adder (10) suitable for determining the stator angular frequency ($\omega_s$) as a function of the rotor angular frequency ($\omega_r$) and of the product of the mechanical rotational speed ($\Omega$) and the number (p) of magnetic poles,

an integrator (12) suitable for determining the angle ($\Theta_s$) that the rotating field forms with respect to the reference frame that is fixed with respect to the stator by integration of the stator angular frequency ($\omega_s$).

6. System according to Claim 5, comprising

a means for measuring stator currents in the three-phase reference frame,

a means (17) for determining stator current measurements in the Park reference frame as a function of stator currents measured in the three-phase reference frame and of the angle ($\Theta_s$) that the rotating field forms with respect to the reference frame that is fixed with respect to the stator,

a first subtractor (18) suitable for determining a corrected request ($I_{qs\_c}$#) for the quadratic component of the stator current by subtracting the quadrature component of the stator current from the request for the quadratic component of the stator current ($I_{qs}$#),

a second subtractor (19) suitable for determining a corrected request ($I_{ds\_c}$#) for the direct component of the stator current by subtracting the direct component of the stator current from the request for the direct component of the stator current ($I_{ds}$#),

the first subtractor (18) and the second subtractor (19) substituting the corrected requests for the direct and quadrature components of the stator current for the requests for the direct and quadrature components of the stator current which are transmitted to the first calculation means (13) for the quadratic component of the stator voltage and to the second calculation means (14) for the direct component of the stator voltage.

# FIG.1

# FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2800935
- US 20150032423 A
- CN 101931361
- FR 2779017
- EP 0884835 A
- EP 0840441 A
- EP 0883511 A
- EP 0617505 A
- EP 0461511 A
- EP 0047893 A